# EUROPEAN PATENT APPLICATION

(11) **EP 3 584 901 A1**
(43) Date of publication of application: **25.12.2019**
(21) Application number: 19460033.4
(22) Date of filing: 12.06.2019
(51) Int. Cl.: H02J 1/10, H02J 1/12, H02P 9/48

(54) **A METHOD OF POWER DISTRIBUTION BETWEEN ELECTRIC GENERATORS AND ITS IMPLEMENTATION**

(30) Priority: 20.06.2018 PL 42599618
(71) Applicant: Akademia Morska W Szczecinie, 70-500 Szczecin (PL)
(72) Inventor: Kozak, Maciej, 72-002 Wawelnica (PL)
(74) Representative: Kachnic, Tadeusz

(57) **Abstract**

The subject matter of this invention is a power distribution method between DC and AC electric generators as well as a system to implement this method, connected through DC intermediary circuits of their converters which regulate the DC voltage value in the intermediary circuit.

The power distribution method between electric generators in which power is distributed using a power control system to control the power of parallel connected voltage sources, of which one is a dependent power source, is characterised by the fact that the power of voltage sources is determined at a given instantaneous speed or instantaneous speeds. Then, the quotient of this shaft speed and the value of the active current defines the proportion of voltage sources.

A system for distributing power between electric generators is characterised by incorporating alternating current generators and machine inverters operating in parallel. These are connected to a shared DC intermediate circuit by controlled or semi-controlled blocking switches and a shared DC intermediary circuit which converts energy into alternating current energy and supplying the DC network and receivers.

## Description

The subject matter of this invention is a method of power distribution between DC and AC electric generators with power electronics converters as well as a system for implementing this method, connected through DC intermediary circuits of their converters, which regulate the DC voltage in the intermediary circuit.

Known power distribution methods between DC and AC electric generators allow power distribution with identical values to be obtained. With a single alternator, the generator control system maintains a constant voltage value at the capacitor using so-called decoupled control. The active current (capacitance charging current) of a working machine inverter also charges the shared capacitor of the line inverter. The voltage value at the main inverter capacitor is equal to the voltage value minus the voltage drop at the power electronics blocking switches that separates the DC circuits. When a squirrel-cage asynchronous generator is used, due to the existence of power electronics switches separating DC circuits, the generator may only draw a magnetising current from the capacitor while the capacitor powers only the mains inverter circuit. In the conventional generator systems, the active power distribution can be symmetrical so that the load is either proportional to the power of the generator or asymmetrical for operational reasons. The reactive power distribution is usually symmetrical and proportional to the nominal power of the machine. In known self-excited synchronous generator solutions, the rotating power reserve is known at all times and depends only on the short-term load of the generator due to the constant speed of the synchronous generators.

From the Japanese patent description JP 2009081942 B4, the solution is known where a distributed power supply system is provided that can control the rotational speed of each generator when multiple generators are running simultaneously, capable of long-lasting parallel operation or capable of working independently. A distributed power supply system allows the long-term operation of interconnected generators, as well as the single operation of multiple G1-Gn generators. It regulates the rotational speed of all G1-Gn generators using characteristics during their parallel connection and controls the rotation speed in the isochronous properties (droop characteristics) of any G1 generator.

In the solution presented in the Japanese patent description JP 2009081942, generator systems are connected through alternating current circuits only. In addition, circuit-breakers are used, but not switches that can switch at frequencies above the 200 Hz.

Another Japanese patent description JP 2014011835 solved the problem of a parallel connection of the transformer's and power electronics converter in a circuit containing permanent magnets generators in the DC distribution system (and other DC sources) using non-controlled semiconductor elements such as diodes. Diodes on both wires prevent the flow of equalizing currents between closed switches, other machine windings, and other converters circuits.

The solution presented above contains separating diodes that are non-controllable components and therefore do not have the functionality necessary to controllably disconnect the generator from the circuit and cannot be used as a protection implementing element.

According to the invention, the power distribution method between electric generators where power is distributed by a power control system from parallel connected voltage sources (one of which is a dependent source) is characterised by the fact that the voltage source power is determined at a given momentary speed or speeds. This is followed by the determination of the ratio of the rotational speed of the shaft to the value of the active current, which determines the percentage of the load of the voltage sources.

Limiting the voltage and output power from a dependent voltage source is advantageously achieved by imposing a current limitation.

Determining the percentage share of load of voltage sources is achieved by adjusting the operation mode of the devices controlling the work of drive or protection systems.

The power distribution is controlled in automatic and/or manual mode.

According to the invention, the method utilizes connections through DC circuits.

According to the invention, the power distribution system between electric generators contains alternating current generators and machine inverters operating in parallel. These are connected to a shared DC link circuit using controlled or semi-controlled blocking switches. The mutual intermediary circuit may be connected to a network converter which converts direct current energy into alternating current energy or which directly supplies the DC network and receivers.

Instead of using separating diodes (non-controlled elements) to solve the problem of a power distribution system between electric generators, controlled or semi-controlled power and electronic switches are used. These prevent the flow of circulating currents and also allow the converter generator to be disconnected from the system.

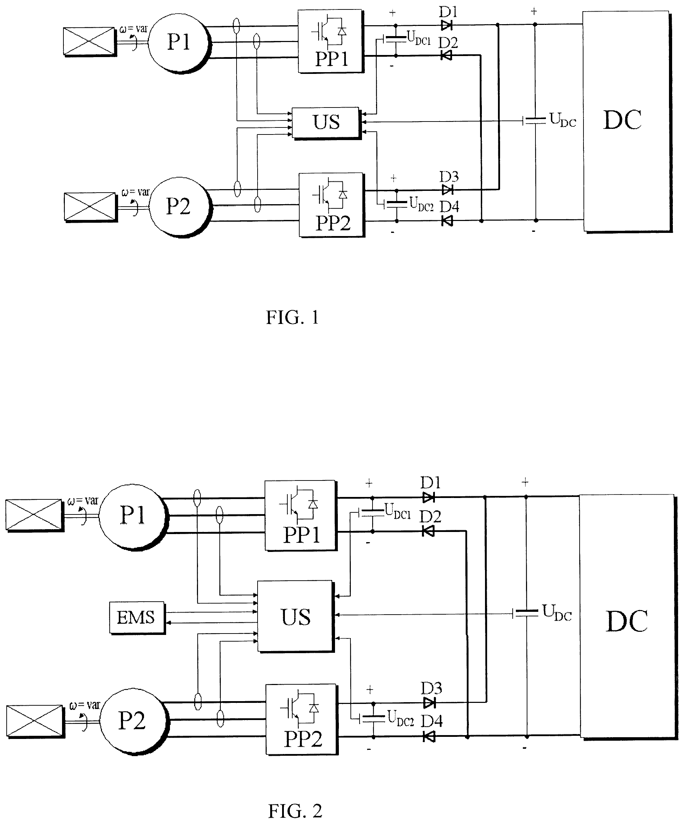

The method of the invention involves the use of two induction generators, connected to a shared DC intermediary circuit by means of e.g., semi-controlled or controlled blocking power electronic switches. A shared intermediary circuit supplies a network inverter that converts DC energy into AC energy at the appropriate voltage and frequency. The use of interlocking switches is necessary to prevent the flow of circulating currents through machine windings and current-conducting inverter transistors. The proper operation of machine inverters and mains inverters requires they be connected to their individual capacitors on the DC side. The simultaneous operation of two generators enables the distribution of power (loads) between operating generators. Power distribution involves applying a load to the generators in a way that takes into account the current operating needs of the power plant and the electrical parameters of the machinery. In the proposed solution, the rotational speed of the generator can vary in a wide range, e.g., to meet the requirements of maintaining the optimum operating point of driving combustion engine. If the generator speed changes, it is necessary to use the methods developed for the specific power distribution conditions, i.e. those different from the nominal (at nominal speed) conditions. The operation of the proposed power distribution system between DC sources, e.g., electric generators in automatic mode, is such that, during operation, the control system (digital or analogue) determines the proportion of the power of each generator according to the electrical characteristics of the machinery as well as the instantaneous rotation speed. At a constant magnetic flux value in the generator air gap, the machine power depends only on the ratio of the shaft speed to the active current. The percentage share of the load of the generators in the proposed method is equal to the quotient of the nominal power of the generators and the total electrical power demand. Figure 1 shows an example of a solution containing two alternating current generators marked P1 and P2. The machine inverters PP1 and PP2, working in the system shown in the scheme, are connected to the mutual DC link circuit by controlled or semi-controlled interlocking switches LE, which are controlled by the BS control block. The shared intermediate circuit supplies the DC link network and receivers, such as a converter which converts DC energy into AC energy at the appropriate voltage and frequency. The use of interlocking switches LE is necessary to prevent the flow of equalizing currents through machine windings and conductive inverter transistors. The correct operation of PP1 and PP2 machine inverters in DC networks and receivers (e.g., mains inverters) requires that they be connected to their individual capacitors on the DC side (C1, C2, and C). The operation of the proposed system with respect to the autonomous operation of one generator, e.g., PP1, is as follows. The generator control system maintains a constant voltage value of UDC1 on the capacitor C1 using a so-called decoupled control. The active current (capacitance charging current) of a working machine inverter also charges the shared capacitor C of the mains inverter. The value of UDC voltage on the capacitor C of the mains inverter is equal to the value of UDC1 voltage minus the voltage drop on the power electronics blocking switch. Due to the presence of a blocking switch LE, when using a squirrel-cage asynchronous generator, the PP1 generator can draw the magnetising current only from capacitor C1 while capacitor C only supplies the circuit of the mains inverter. The control process is more complex when two generators (PP1 and PP2) are simultaneously operated, and the power (load) distribution between operating generators should be used. Power distribution involves applying a load to the generators in a way that takes into account the current operating needs of the power plant and the electrical parameters of the machinery. In conventional generator systems, the active power distribution can be symmetrical, so that the load is either proportional to the power of the generator or asymmetrical for operational reasons. The reactive power distribution is usually symmetrical and proportional to the power of the machine. In known synchronous generator solutions, the power reserves are known at all times and depend only on the short-term load of the generator due to the constant speed of the synchronous generators. The operation of the proposed power distribution system between DC sources, e.g., electric generators in automatic mode, is such that, during operation, the control system (digital or analogue) determines the proportion of the power of each generator according to the electrical characteristics of the machinery as well as the instantaneous rotation speed. At a constant magnetic flux value in the generator slot, the machine power depends only on the ratio of the shaft speed to the active current. Assuming the nominal value of the generator current as i_{sq} (active current), the relation to determine the nominal power of the machine at a given speed can be obtained. The percentage share of PP1 and PP2 generators load in the proposed method is equal to the quotient of the nominal power of the generators and the total electrical power demand. These values may be expressed either in decimal or percentage form.

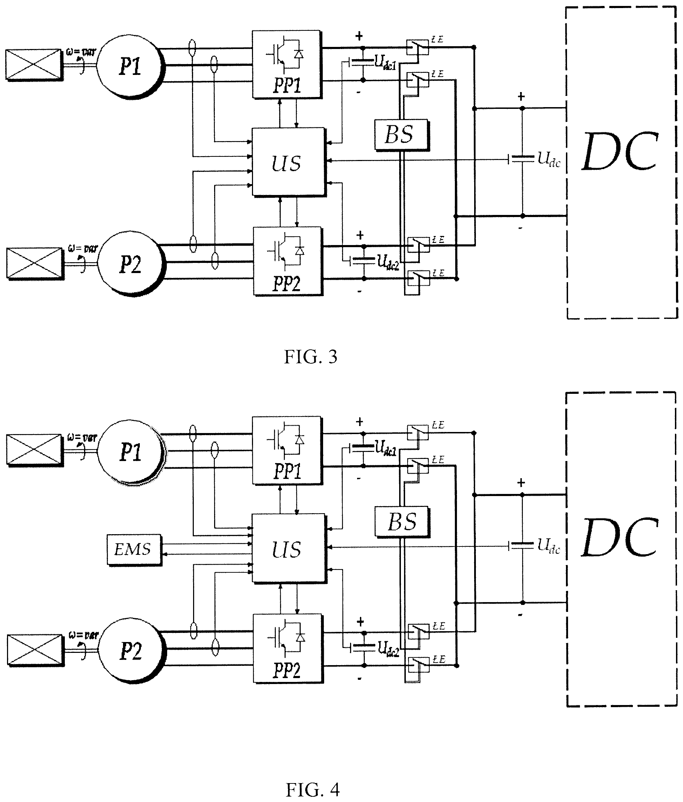

The scope of the invention is explained in more detail by the example of the execution shown in the drawing, where Fig. 1 and Fig. 3 show a schematic representation of a system with alternators connected by intermediary circuits of back-to-back converters. Fig. 2 and Fig. 4 schematically represent a system with generators connected to intermediate circuits of bi-directional converters and control signals from the superior energy management system (EMS).

The symbols in the figures represent the following: PI, P2 - AC generators, PP1, PP2 - machine inverters, LE - controlled or semi-controlled switches, US - control system, BS - interlocking switches control block LE, DC - DC network, EMS - energy management system, and UDC, UDC1, UDC2 - capacitor and capacitor voltage values.

## Claims

1. The method of power distribution between electric generators using a power control system for parallel connected voltage sources, one of which is a dependent source, **is characterised in that** the power of the voltage sources is determined at a given momentary speed or momentary speeds. Then the quotient of this rotation speed of the shaft and the value of active current can be determined, which indicates the percentage of the load of voltage sources.

2. The method according to claim 1 **is characterised in that** the value of the output power voltage from a subordinate voltage source is limited by imposing a current limitation.

3. The method according to claim 1 **is characterised in that** the determination of the percentage share in the load of voltage sources is performed by regulating the operating mode of devices controlling the operation of drive systems or protection systems.

4. The method according to claim 1 **is characterised in that** the power distribution is controlled in automatic and/or manual mode.

5. According to the invention, the power distribution system between electric generators **is characterised in that** it contains alternating current generators and machine inverters operating in parallel. These generators are connected to a shared DC semiconductor circuit by controlled or semi-controlled blocking switches and a shared DC conversion circuit to convert energy into AC energy to supply DC power to the network and receivers.
